# EUROPÄISCHE PATENTANMELDUNG

(11) **EP 2 573 138 A1**
(43) Veröffentlichungstag der Anmeldung: **27.03.2013**
(21) Anmeldenummer: 11182184.9
(22) Anmeldetag: 21.09.2011
(51) Int. Cl.: C08L 77/00, C08L 77/02, C08L 67/02

(54) **Polyamid-Formmassen**

(71) Anmelder: BASF SE, 67056 Ludwigshafen (DE)
(72) Erfinder: Dr. Jain, Sachin, Jalgaon, 425001 (IN); dr. -Ing. Nalawade, Sameer, 68159 Mannheim (DE)

(57) **Zusammenfassung**

Die vorliegende Erfindung betrifft thermoplastische Formmassen, enthaltend:
A) 80 bis 99,5 Gew.-%, bezogen auf die Komponenten A und B, eines Polyamids A;
B) 0,5 bis 20 Gew.-%, bezogen auf die Komponenten A und B, einer Polymermischung B enthaltend mindestens eines Polyesters auf Basis von aliphatischen und aromatischen Dicarbonsäuren und einer aliphatischen Dihydroxyverbindung;
C) 0 bis 60 Gew.-%, bezogen auf die Komponenten A bis D, eines faserförmigen Verstärkungsstoffes C;
D) 0 bis 10 Gew.-%, bezogen auf die Komponenten A bis D, weitere Zusatzstoffe D.

Die Erfindung betrifft weiterhin die Verwendung der zuvor genannten Formmassen zur Herstellung von Fasern, Folien und Formkörpern sowie Fasern, Folien und Formkörpern erhältlich aus diesen Formmassen.

## Beschreibung

Die vorliegende Erfindung betrifft thermoplastische Formmassen, enthaltend:
A) 80 bis 99,5 Gew.-%, bezogen auf die Komponenten A und B, eines Polyamids A;
B) 0,5 bis 20 Gew.-%, bezogen auf die Komponenten A und B, einer Polymermischung B enthaltend mindestens eines Polyesters auf Basis von aliphatischen und aromatischen Dicarbonsäuren und einer aliphatischen Dihydroxyverbindung;
C) 0 bis 60 Gew.-%, bezogen auf die Komponenten A bis D, eines faserförmigen Verstärkungsstoffes C;
D) 0 bis 10 Gew.-%, bezogen auf die Komponenten A bis D, weitere Zusatzstoffe D.

Die Erfindung betrifft weiterhin die Verwendung der zuvor genannten Formmassen zur Herstellung von Fasern, Folien und Formkörpern sowie Fasern, Folien und Formkörpern erhältlich aus diesen Formmassen.

Technische Kunststoffe wie Polyamid weisen in der Regel sehr gute mechanische Eigenschaften auf. Für manche Anwendungen jedoch weisen die Polyamide immer noch eine zu geringe Schlagzähigkeit und insbesondere Kerbschlagzähigkeit auf. In Glasfaserverstärktem Polyamid steigt zwar die Kerbschlagzähigkeit an, meist jedoch auf Kosten des Bruchdehnungsverhaltens.

Bei anderen Kunststoffen lässt sich dieses Problem durch Zusatz von niedermolekularen Substanzen (Weichmacher) lösen. Die gängigen Polyamide 6 und 66 sind jedoch mit den meisten Weichmachern unverträglich. Allenfalls mit speziellen Weichmachern wie N-substituierten aromatischen Sulfonamiden sind sie begrenzt verträglich. Deswegen spielen Weichmacher für Polyamide generell und insbesondere für die Polyamid-Typen 6 und 66 keine besondere Bedeutung.

Ziel der vorliegenden Erfindung war es demnach einen Weichmacher zu finden, der mit den gängigen Polyamiden verträglich ist und zu einer Verbesserung von gleichzeitig dem Schlagverhalten wie dem Zugverhalten führt.

Überraschenderweise wurde gefunden, dass durch Einarbeiten von 0,5 bis 20 Gew.-% eines Polyesters B Schlagverhalten und Zugverhalten der Polyamide verbessert werden kann. Polyester B ist in den angegebenen Mengenverhältnissen mit den gängigen Polyamid-Typen 6 und 66 gut verträglich.

Im Folgenden wird die Erfindung näher beschrieben:

Als Komponente A enthalten die erfindungsgemäßen Formmassen 80 bis 99,5, vorzugsweise 85 bis 99, und insbesondere bevorzugt 85 bis 95 Gew.-%, bezogen auf die Komponenten A und B, mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid® X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid®C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A im Sinne der Erfindung und die enthaltenen Monomeren.

### AB-Polymere:

- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam
- AA/BB-Polymere:
- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-Nonandiamin, Terephthalsäure
- PA MXD6: m-Xylylendiamin, Adipinsäure
- AA/BB-Polymere:
- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Als Komponente B teilaromatische (aliphatisch-aromatische) Polyester zu verstehen. Komponente B ist in den erfindungsgemäßen Formmassen in 0,5 bis 20, vorzugsweise 1 bis 15, und insbesondere bevorzugt 5 bis 15 Gew.-%, bezogen auf die Komponenten A und B, enthalten.

Teilaromatische Polyester bestehen aus aliphatischen Diolen und aliphatischen sowie aromatischen Dicarbonsäuren. Zu den geeigneten teilaromatischen Polyestern gehören lineare nicht kettenverlängerte Polyester (WO 92/09654). Insbesondere sind aliphatisch/aromatische Polyester aus Butandiol, Terephthalsäure und aliphatischen C₄-C₁₈-Dicarbonsäuren wie Bernsteinsäure, Glutarsäure, Adipinsäure, Korksäure, Azelainsäure, Sebazinsäure und Brassylsäure (beispielsweise wie in WO 2006/097353 bis 56 beschrieben) geeignete Mischungspartner. Bevorzugt werden kettenverlängerte und/oder verzweigte teilaromatische Polyester als Komponente B eingesetzt. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht.

Insbesondere geeignet sind biologisch abbaubare, aliphatisch-aromatischer Polyester B, die enthalten:
B₁) 40 bis 80 Gew.-% bezogen auf das Gesamtgewicht der Komponenten B₁ und B₂ mindestens einer Bernstein-, Adipin-, Azelain-, Sebazin- oder Brassylsäure oder deren esterbildende Derivate oder Mischungen davon,
B₂) 20 bis 60 Gew.-% bezogen auf das Gesamtgewicht der Komponenten B₁ und B₂ Terephthalsäure oder deren esterbildende Derivate oder Mischungen davon,
B₃) 98 bis 102 mol-% bezogen auf die Komponenten B₁ und B₂, 1,4-Butandiol oder 1,3-Propandiol oder Mischungen davon als Diolkomponente,
B₄) 0 bis 1 Gew.-%, bezogen auf Komponente B, eines Verzweigers,
B₅) 0 bis 2 Gew.-%, bezogen auf Komponente B, eines Kettenverlängerers,
B₆) 0 bis 2 Gew.-%, bezogen auf Komponente B, weitere Zusatzstoffe.

Bevorzugt eingesetzte aliphatisch-aromatische Polyester B enthalten:
B₁) 40 bis 60 Gew.-% bezogen auf das Gesamtgewicht der Komponenten B₁ und B₂ mindestens einer Bernstein-, Adipin-, Azelain-, Sebazin- oder Brassylsäure oder deren esterbildende Derivate oder Mischungen davon,
B₂) 40 bis 60 Gew.-% bezogen auf das Gesamtgewicht der Komponenten B₁ und B₂ Terephthalsäure oder deren esterbildende Derivate oder Mischungen davon,
B₃) 98 bis 102 mol-% bezogen auf die Komponenten B₁ und B₂, 1,4-Butandiol oder 1,3-Propandiol oder Mischungen davon als Diolkomponente,
B₄) 0 bis 1 Gew.-%, bezogen auf Komponente B, eines Verzweigers,
B₅) 0,1 bis 2 Gew.-%, bezogen auf Komponente B, eines Kettenverlängerers,
B₆) 0 bis 2 Gew.-%, bezogen auf Komponente B, weitere Zusatzstoffe.

Als aliphatische Dicarbonsäuren eignen sich vorzugsweise, Bernsteinsäure, Adipinsäure und insbesondere bevorzugt Sebazinsäure. Die genannten Disäuren haben den Vorteil, dass sie auch als nachwachsende Rohstoffe zur Verfügung stehen.

Die Synthese der beschriebenen Polyester B erfolgt nach den in WO-A 92/09654, WO-A 96/15173 oder vorzugsweise in WO-A 09/127555 und WO-A 09/127556 beschriebenen Verfahren, vorzugweise in einer zweistufigen Reaktionskaskade. Zunächst werden die Dicarbonsäurederivate zusammen mit dem Diol in Anwesenheit eines Umesterungskatalysators zu einem Präpolyester umgesetzt. Dieser Präpolyester weist im Allgemeinen eine Viskositätszahl (VZ) von 50 bis 100mL/g, vorzugsweise 60 bis 80 mL/g auf. Als Katalysatoren werden üblicherweise Zink-, Aluminium- und insbesondere Titankatalysatoren eingesetzt. Titankatalysatoren wie Tetra(isopropyl)orthotitanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie über die Kompostierung unmittelbar in die Umwelt gelangen können.

Die Polyester B werden anschließend in einem zweiten Schritt nach den in WO-A 96/15173 und EP-A 488 617 beschriebenen Verfahren hergestellt. Der Präpolyester wird mit Kettenverlängeren B₅, beispielsweise mit Diisocyanaten oder mit epoxidhaltigen Polymethacrylaten in einer Kettenverlängerungsreaktion zu einem Polyester mit einer VZ von 50 bis 450 mL/g, vorzugsweise 80 bis 250 mL/g umgesetzt.

In der Regel werden 0,01 bis 2 Gew-%, vorzugsweise 0,1 bis 2,0 Gew.-% und insbesondere bevorzugt 0,1 bis 1,0 Gew.-% bezogen auf das Gesamtgewicht der Komponente B, eines Verzweigers (B₄) und/oder Kettenverlängerers (B₅) ausgewählt aus der Gruppe bestehend aus: einem polyfunktionellen Isocyanat, Isocyanurat, Oxazolin, Epoxid, Peroxid, Carbonsäureanhydrid , einem mindestens trifunktionellen Alkohol oder einer mindestens trifunktionellen Carbonsäure eingesetzt. Als Kettenverlängerer B₅ kommen polyfunktionelle und insbesondere difunktionelle Isocyanate, Isocyanurate, Oxazoline, Carbonsäureanhydrid oder Epoxide in Frage.

Kettenverlängerer sowie Alkohole oder Carbonsäurederivate mit mindestens drei funktionellen Gruppen können auch als Verzweiger B₄ aufgefasst werden. Besonders bevorzugte Verbindungen haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten B₄ und B₅ lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten. Die Verbindungen B₅ wirken scherentzähend, d.h. die Viskosität bei höheren Schergeschwindigkeiten wird geringer.

Die Polyester B weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Die genannten Polyester können Hydroxy- und/oder Carboxylend-gruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Bevorzugt sind Polyester mit Säurezahlen kleiner als 1,5 mg KOH/g.

Die biologisch abbaubaren Polyester B können weitere dem Fachmann bekannte, aber nicht erfindungswesentliche Zusatzstoffe B₆ enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt.

Der faserförmige Verstärkungsstoff C wird in Mengen von 0 bis 60 Gew.-%, insbesondere 5 bis 50 Gew.-% und insbesondere bevorzugt 20 bis 40 Gew.-% bezogen auf die Komponenten A bis D eingesetzt.

Als bevorzugte faserförmige Füllstoffe C seien Kohlenstofffasern, Aramid-Fasern, Glasfasern und Kaliumtitanat-Fasern genannt, wobei Glasfasern als E-Glas besonders bevorzugt sind. Diese werden als Rovings in den handelsüblichen Formen eingesetzt.

Die erfindungsgemäß als Roving eingesetzten Glasfasern weisen einen Durchmesser von 6 bis 20 µm, bevorzugt von 10 bis 18 µm auf, wobei der Querschnitt der Glasfasern rund, oval oder eckig ist. Insbesondere werden erfindungsgemäß E-Glasfasern verwendet. Es können aber auch alle anderen Glasfasersorten, wie z.B. A-, C-, D-, M-, S-, R-Glasfasern oder beliebige Mischungen davon oder Mischungen mit E-Glasfasern eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 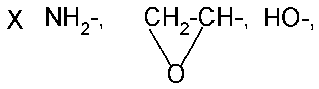
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf C)) zur Oberflächenbeschichtung eingesetzt.

Andere geeignete Beschichtungsmittel (auch Schlichte genannt) basieren auf Isocyanaten.

Bevorzugt werden Langglasfasern mit einer Länge von 3 bis 24 mm und einem L/D (Länge/Durchmesser)-Verhältnis von 100 bis 4000, insbesondere 350 bis 2000 und ganz besonders 350 bis 700 eingesetzt.

Die Zusatzstoffe D werden in Mengen von 0 bis 10 Gew.-%, insbesondere 0,5 bis 5 Gew.-%, bezogen auf die Komponenten A bis D eingesetzt. Die hohen Gewichtsanteile kommen insbesondere für Füllstoffe in Frage.

Geeignet sind beispielsweise nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Die thermoplastischen Formmassen enthalten weiterhin vorteilhafterweise ein Schmiermittel D; von 0 bis 3, bevorzugt von 0,05 bis 3, vorzugsweise von 0,1 bis 1,5 und insbesondere von 0,1 bis 1 Gew.-%,bezogen auf die Gesamtmenge der Komponenten A bis D enthalten.

Bevorzugt sind Aluminium-, Alkali-, Erdalkalisalze oder Ester- oder Amide von Fettsäuren mit 10 bis 44 C-Atomen, vorzugsweise mit 14 bis 44 C-Atomen. Die Metallionen sind vorzugsweise Erdalkali und Aluminium (Al), wobei Calzium (Ca) oder Magnesium besonders bevorzugt sind. Bevorzugte Metallsalze sind Ca-Stearat und Ca-Montanat sowie Al-Stearat. Es können auch Mischungen verschiedener Salze eingesetzt werden, wobei das Mischungsverhältnis beliebig ist.

Die Fettsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole der Ester können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine der Amide können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als weitere Komponente D können die erfindungsgemäßen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel, Kautschuke usw. enthalten.

Geeignete Kautschuke für Polyamide können der PCT/EP 2011/059546 entnommen werden auf die in diesem Zusammenhang hier explizit verwiesen wird.

Als Beispiele für Oxidationsverzögerer und Wärmestabilisatoren seien Phosphite und weitere Amine (z. B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Als Flammschutzmittel seien roter Phosphor, P- und N-haltige Flammschutzmittel sowie halogenierte Flammschutzmittelsysteme und deren Synergisten genannt.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschlie-βend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B sowie gegebenenfalls C und D mit dem Polyamid A gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A bis zur gewünschten Viskosität kondensiert.

Die erfindungsgemäßen thermoplastischen Formmassen zeichnen sich durch eine gute Verarbeitbarkeit bei gleichzeitig guter Mechanik, sowie eine deutlich verbesserte WAB und Oberfläche aus.

Diese eignen sich zur Herstellung von Fasern, Folien und Formkörpern jeglicher Art. Diese zeichnen sich durch ein exzellentes Schlag- wie Zugverhalten aus. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Membranschalter, Leiterplattenbaugruppen, mikroelektronische Bauteile, Spulen, I/0 Steckverbinder, Stecker für Leiterplatten (PCB), Stecker für flexible Leiterplatten (FPC), Stecker für flexible integrierte Schaltkreise (FFC), High-Speed Steckverbindungen, Klemmleisten, Anschlussstecker, Gerätestecker, Kabelbaumkomponenten, Schaltungsträger, Schaltungsträgerkomponenten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich

### Beispiele

### Messmethoden und Eigenschaften

Die Charpy-Kerbschlagzähigkeit wurde bei 23°C respektive -30°C gemäß ISO 179-2/1 eA ermittelt.

Die Streckspannung, E-Modul und Bruchdehnung wurde nach ISO 527-2:1993 ermittelt. Die Zuggeschwindigkeit betrug 5 mm/min.

### Einsatzstoffe

Es wurden folgende Komponenten verwendet:
Komponente A:
   - Ai:: Ultramid® B27E: Polyamid 6 der Firma BASF SE (CAS:25038-54-4, Dichte: 1120-1150 g/l, Schmelzpunkt: 220 °C, Relative Viskosität (1 % in 96% H₂SO₄): 2,7± 0,03)
Komponente B:
   - Bi:: Ecoflex®C1200 (alte Produktbezeichnung: Ecoflex® FBX7011): ein Polybutylenadipat-coterephthalat der Fa. BASF SE (CAS:55231-08-8, Dichte 1250 - 1270, Schmelzpunkt 110 bis 115 °C)
Komponente C:
   - Ci:: TufRov®4510: Glasfasern der Fa. PPG Fiber Glass Europe (E-Glas, ASTM D578-98, Silane sizing, 17 Micrometer Faserdurchmesser, roving tex-2400 (2,4 g/m))
Komponente D:
   - Di:: AcrawaxC der Firma Lonza AG (besteht aus N,N'-Ethylenbisstearamid (CAS:110-30-5), N,N'-Ethan-1,2-diylbishexadecan-1-amid (CAS: 5518-18-3), C₁₄-₁₈-Fettsäuren (CAS: 67701-02-4), Schmelzpunkt: 140-145 °C)
   - Dii:: Irganox 98 der Firma BASF SE (N,N'-Hexane-1,6-diylbis[3-(3,5-di-tert-butyl-4-hydroxyphenylpropionamide)], CAS Number: 23128-74-7, Schmelzpunkt: 156-165 °C)
   - Diii:: Talkum IT der Firma Mondo Minerals (CAS: 14807-96-6, Dichte:2750 g/l)

### Beispiele 1 bis 3

Die Formmassen des Vergleichsbeispiels 1 und der Beispiele 2 und 3 wurden auf einer ZSK MC 26 mit einer Drehzahl von 300 1/min bei 260°C hergestellt:

### Herstellung der Probekörper

Die zur Bestimmung der Eigenschaften verwendeten Prüfkörper wurden mittels einer Battenfeld 50 Spritzgußmaschine hergestellt. Die unter 2) und 3) hergestellten Granulate wurden aufgeschmolzen und mit Umdrehungszahl der Schnecke 100 U/min und Verweilzeit 50 s in das Werkzeug eingepresst. Die Prüfkörper für die Spannungstests wurden nach ISO 527-2/1 A/5 und die Prüfkörper für die Schlagzähigkeitsmessungen nach ISO 179-2/1 eA(F) hergestellt. Die Einspritztemperatur betrug 260°C, die Werkzeugtemperatur 80°C.

**Tabelle 1: Einfluss von Komponente B auf das Schlag- und Zugverhalten von Polyamid**

| Komponenten | Vergleichs-Beispiel 1V | Beispiel 2 | Beispiel 3 |
|---|---|---|---|
| [Gew.-%] | | | |
| Ai) | 98,61 | 88,75 | 88,75 |
| Bi) | | 5 | 10 |
| Di) | 1,11 | 1,05 | 1 |
| Dii) | 0,22 | 0,21 | 0,2 |
| Diii) | 0,06 | 0,05 | 0,05 |
| Total | 100 | 100 | 100 |
| | | | |
| Charpy gekerbt | 4,4 | 5,8 | 8,7 |
| [kJ/m²] bei 23°C | | | |
| Charpy gekerbt | 2,7 | 2,9 | 3,2 |
| [kJ/m²] bei -30°C | | | |

Die Zusammensetzungen der Formmassen und die Ergebnisse der Messungen sind der Tabelle 1 zu entnehmen. Beispiel 2 mit 5 Gew.-% der erfindungsgemäßen Polymermischung B wies bei 23 °C (-30 °C) eine um 32 % (7-8 %) höhere Kerbschlagzähigkeit als Vergleichsbeispiel 1 auf. Beispiel 3 mit 10 Gew.-% der erfindungsgemäßen Polymermischung B wies bei 23 °C (-30 °C) eine um 107 % (19 %) höhere Kerbschlagzähigkeit als Vergleichsbeispiel 1 auf.

Die Zugeigenschaften: Bruchdehnung, Zugfestigkeit und E-Modul waren im erfindungsgemäßen Beispiel 3 gegenüber Beispiel 2 verbessert und auf einem ähnlichen Niveau wie in Vergleichsbeispiel 1V.

## Patentansprüche

1. Thermoplastische Formmassen, enthaltend:
A) 80 bis 99,5 Gew.-%, bezogen auf die Komponenten A und B, eines Polyamids A;
B) 0,5 bis 20 Gew.-%, bezogen auf die Komponenten A und B, einer Polymermischung B enthaltend mindestens eines Polyesters auf Basis von aliphatischen und aromatischen Dicarbonsäuren und einer aliphatischen Dihydroxyverbindung;
C) 0 bis 60 Gew.-%, bezogen auf die Komponenten A bis D, eines faserförmigen Verstärkungsstoffes C;
D) 0 bis 10 Gew.-%, bezogen auf die Komponenten A bis D, weitere Zusatzstoffe D.

2. Thermoplastische Formmassen nach Anspruch 1, in denen die Komponente B ein Copolymerisat ist aus:
B₁) 40 bis 80 Gew.-% bezogen auf das Gesamtgewicht der Komponenten B₁ und B₂ mindestens einer Bernstein-, Adipin-, Azelain-, Sebazin- oder Brassylsäure oder deren esterbildende Derivate oder Mischungen davon,
B₂) 20 bis 60 Gew.-% bezogen auf das Gesamtgewicht der Komponenten B₁ und B₂ Terephthalsäure oder deren esterbildende Derivate oder Mischungen davon,
B₃) 98 bis 102 mol-% bezogen auf die Komponenten B₁ und B₂, 1,4-Butandiol oder 1,3-Propandiol oder Mischungen davon als Diolkomponente,
B₄) 0 bis 1 Gew.-%, bezogen auf Komponente B, eines Verzweigers,
B₅) 0 bis 2 Gew.-%, bezogen auf Komponente B, eines Kettenverlängerers,
B₆) 0 bis 2 Gew.-%, bezogen auf Komponente B, weitere Zusatzstoffe.

3. Thermoplastische Formmassen nach Anspruch 1, in denen die Komponente B ein Copolymerisat ist aus:
B₁) 40 bis 60 Gew.-% bezogen auf das Gesamtgewicht der Komponenten B₁ und B₂ mindestens einer Bernstein-, Adipin-, Azelain-, Sebazin- oder Brassylsäure oder deren esterbildende Derivate oder Mischungen davon,
B₂) 40 bis 60 Gew.-% bezogen auf das Gesamtgewicht der Komponenten B₁ und B₂ Terephthalsäure oder deren esterbildende Derivate oder Mischungen davon,
B₃) 98 bis 102 mol-% bezogen auf die Komponenten B₁ und B₂, 1,4-Butandiol oder 1,3-Propandiol oder Mischungen davon als Diolkomponente,
B₄) 0 bis 1 Gew.-%, bezogen auf Komponente B, eines Verzweigers,
B₅) 0,1 bis 2 Gew.-%, bezogen auf Komponente B, eines Kettenverlängerers,
B₆) 0 bis 2 Gew.-%, bezogen auf Komponente B, weitere Zusatzstoffe.

4. Thermoplastische Formmassen nach einem der Ansprüche 1 bis 3, in denen der faserförmige Verstärkungsstoff C 20 bis 50 Gew.-%, bezogen auf die Komponenten A bis D, einer Kohlenstofffaser, Aramid-Faser oder Glasfaser bedeutet.

5. Thermoplastische Formmassen nach Anspruch 4, in denen der faserförmige Verstärkungsstoff C 20 bis 50 Gew.-%, bezogen auf die Komponenten A bis D, Glasfasern von 3 bis 24 mm Länge bedeutet.

6. Verwendung der thermoplastischen Formmassen gemäß den Ansprüchen 1 bis 5 zur Herstellung von Fasern, Folien und Formkörpern.

7. Fasern, Folien und Formkörper, erhältlich aus den thermoplastischen Formmassen gemäß den Ansprüchen 1 bis 5.
